**Europäisches Patentamt**

**European Patent Office**

**Office européen des brevets**

(19)

(11) Publication number: **0 054 658**
**A1**

# (12) EUROPEAN PATENT APPLICATION

(21) Application number: **81108545.5**

(22) Date of filing: **20.10.81**

(51) Int. Cl.³: **G 06 F 15/20**

(30) Priority: **19.12.80 US 218137**

(43) Date of publication of application: **30.06.82**
**Bulletin 82/26**

(84) Designated Contracting States: **DE FR GB**

(71) Applicant: **International Business Machines Corporation, Armonk, N.Y. 10504 (US)**

(72) Inventor: **Hamilton, Douglas Alan, 11708 Sterlinghill Drive, Austin Texas 78758 (US)**
Inventor: **Nielsen, Robert Curt, 11104 Pond View Circle, Austin Texas 78753 (US)**
Inventor: **Pierschalla, Barbara Rose, 1124 Rutland Drive 20, Austin Texas 78758 (US)**

(74) Representative: **Bonneau, Gérard, COMPAGNIE IBM FRANCE Département de Propriété Industrielle, F-06610 La Gaude (FR)**

(54) **Automatic spelling checking and correction process in a text processing system.**

(57) Process for improving the automatic spelling checking and correction in a text processing system by efficiently parsing a continuous string of intermixed text and control data into text words. The technique includes defining a set of word delimiters to parse the text stored in text buffer (2). A character segment is parsed from the text and transferred into a word buffer (4) where characters and control codes not affecting spelling are removed from the character segment by using a table memory (5). The character segment is then examined for alphabetic character content and verified if it contains no alphabetic characters. If the character string contains alphabetic characters, the beginning and ending punctuation are discarded and the string is scanned for internal punctuation. A comparison is made with the contents of a dictionary memory (6) at various points of the discard.

AUTOMATIC SPELLING CHECKING AND CORRECTION PROCESS
IN A TEXT PROCESSING SYSTEM

This invention relates to text processing systems and more particularly to a process for improving the efficiency of automatic spelling checking and correction.

In implementing a practical automatic spelling checking and correction system where words are scanned within the text of a document, one of the primary problems if the determination of word boundaries. An obvious approach is to consider all non-alphabetic characters as word delimiters. Under this approach all single letters are considered valid since they occur as initials. However, this approach is not adequate since parsing of a word with a typographical error into two correct words is possible. On the other hand, limiting the word delimiters to a small set of characters but performing no other processing will not always recognize normal punctuation. For example, if the period is not a word delimiter (because of its use in abbreviations) then a word that occurs at the end of a sentence fails to verify because the period would be considered a character of the word.

Another approach is to not attempt verification of words that contain any non-alphabetic characters. However, this approach will also exclude words that contain typographical errors that are non-alphabetic.

It has been discovered that improved performance in a practical automatic spelling checking and correction system is demonstrable by providing a technique for parsing the text data using a small set of word delimiters and then scanning the parsed text to remove punctuation. The technique includes defining a set of word delimiters to parse the text such as space codes, tab codes, carrier return codes (except in hyphenated words), index codes, format change codes and beginning and ending of text codes. After a character string is parsed from the text it is transferred into a word buffer where character codes and control codes not affecting spelling are removed from the character string. The character string is then examined for alphabetic character content and verified if it contains no alphabetic characters. If the character string contains alphabetic characters, the beginning punctuation and ending punctuation are discarded and the string is scanned for internal punctuation. A comparison is made with the contents of a dictionary memory at various points of the discard.

The invention will be described with reference to the drawings where,

FIGURE 1 is a block diagram of some components in the text processing system utilizing the present invention.

FIGURE 2 is a flow diagram of the operation of the main routine for the present invention.

FIGURE 3 is a flow diagram of the valid word subroutine for the present invention.

FIGURE 4 is a flow diagram of the punctuation discard subroutine for the present invention.

FIGURE 5 is a flow diagram of the compound word subroutine for the present invention.

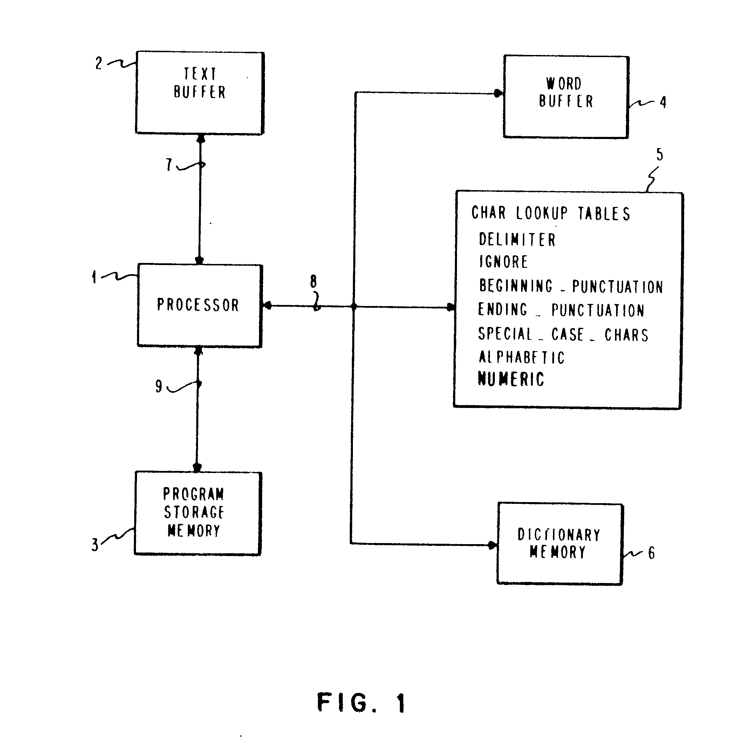

Referring to FIG. 1, these is shown a block diagram of part of a text processing system which includes a processor 1 of the general purpose type capable of decoding and executing instructions. The processor 1 is in two-way communication over bus 9 with program memory 3 which contains instructions that control the operation of the processor 1. The processor 1 is also in two-way communication over bus 7 with text buffer 2 which contains the document whose text is to be examined for misspelled words. The processor 1 is in bi-directional communication over bus 8 with word buffer 4, table memory 5 and dictionary memory 6. The word buffer 4 stores a single word coming from the text stored in text buffer 2 and is being examined for the correctness of its spelling. The table memory 5 contains the special characters that are used in the parsing process as will be hereinafter described. The dictionary memory 6 contains the list of correctly spelled words to which the word in word buffer 4 is compared in order to determine the correctness of its spelling. The construction and searching of the dictionary memory 6 is not a part of this invention. An example of a suitable technique for constructing and searching a dictionary memory is disclosed in U.S. Patent 3,995,254 issued November 30, 1976. While the text buffer 2, program memory 3, word buffer 4, table memory 5 and dictionary memory 6 are shown as separate memory units, it is understood that a single memory could be partitioned to provide these memories.

The word parsing punctuation discard process operates to parse the text stored in the text buffer 2 into character strings representing words using a predetermined set of delimiters stored in the table memory 5. The parsed character string is then stored in the word buffer 4 for further processing. Characters and control codes not affecting spelling are removed from the character string. These are defined as ignore characters in the table memory 5. The character string is examined for the presence of alphabetic characters. If the character string contains no alphabetic characters then it is verified as being correct. If the character string contains alphebetic characters, punctuation is discarded from the beginning and ending of the character string and the character string is compared to the contents of the dictionary memory 6 at various points of the discard. Special checks are performed on the character string for compound words and valid cases of single letters, for example, a., b), and c].

4                    0054658

The word delimiters are normal break points between words including codes for the beginning of text, end of text, space, required space, tab, required tab, carrier return (not preceded by a syllable hyphen), required carrier return, index, index return, required format, return format, and page end. Ignore characters are control codes intermixed with the text characters that have no effect on spelling. This includes such codes as carrier return (preceded by a syllable hyphen), syllable hyphen, blank hyphen, and any number of required backspaces followed by an equal number of underscores. The process of discarding punctuation is iterative and consists of looping through the algorithm to test for various situations until none are found to apply or the word verifies as valid by a dictionary match or as a special case. The situations are checked in the following order : beginning punctuation, special cases, ending punctuation, and single quotes or periods.

Any of the following characters occuring at the beginning of the text word are discarded : underscore, required backspace, left parenthesis, left rectangular bracket, left brace, less than symbol, left French quotation mark, double quote, half index up, half index down, required hyphen, inverted question dark, or inverted exclamation mark.

A special case occurs where a single alphabetic character is used as an initial or as a paragraph number. If the ramining word consists entirely of a single unaccented alphabetic character following by a period, right parenthesis or right rectangular bracket, the word is verified as valid.

The following characters are predefined as ending punctuation and are discarded one at a time when they occur at the ending of a word : comma, colon, semicolon, question mark, exclamation mark, right rectangular bracket, right brace, double quote, greater than symbol, right French quotation mark, underscore, half index up, half index down, superscript, or right parenthesis not matched be a left parenthesis. Any numerics preceded by a half index up will also be removed from the ending of the word, allowing the notation often used in footnoting to be recognized. After each ending character is removed a check is made for the special case mentioned above.

Single quotes at the beginning or end of a word may be punctuation or an actual part of the word. Similarly, periods occuring at the end of a word may be punctuation ending a sentence or part of an abbreviation. Single quotes and periods are handled by first checking the word for a match in the dictionary. If the word fails to match and there is a beginning single quote, that quote is removed and any uncovered beginning punctuation is discarded. Otherwise the ending quote or period is removed and any uncovered ending punctuation is discarded.

Compound words are processed as follows :

If the word contains slashes, or if the word contains required hyphens, it will verify as valid if either the individual parts verify as valid or the word verifies as valid as a whole. If a matched right parenthesis appears as the last character of the word, the word will verify as valid if (a) it verifies as valid "as is" or (b) the stem left after the parenthesized string is deleted verifies as valid and either (i) the word formed by deleting only the parentheses verifies or (ii) the word within the parentheses verifies as valid.

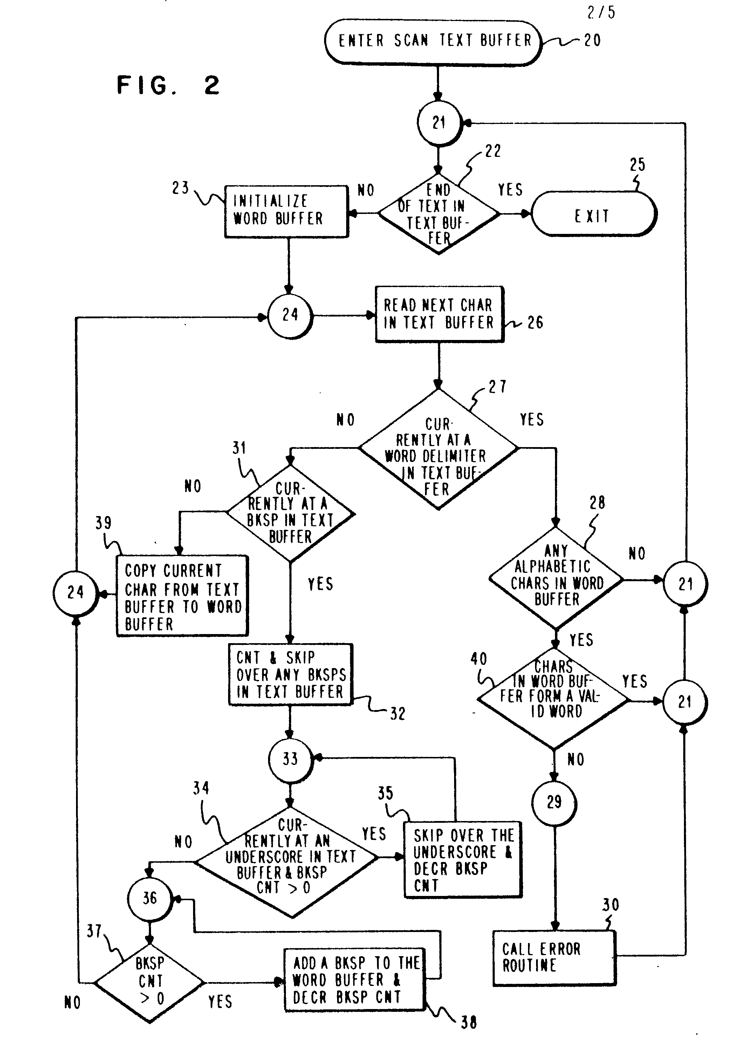

The detailed description of the logic flow for implementing the invention will now be discussed. Referring to FIG. 2 there is shown a flow diagram for the main logic routine for scanning text in the text buffer 2 for parsing into words. It will be understood that the text stored in the text buffer 2 could be generated through keyboarding, reading from magnetic tapes, cards, disks, etc. It will also be assumed that the sytem contains means external to the word parsing routine for initiating operation of the word parsing routine. This external means, for example, may be a keybutton on a keyboard for initiating spelling check or may be a "CALL" statement in a control program. It will further be understood that logic for this invention can be implemented as combinational logic as well as a control program for operating a general purpose processor. The word parsing routine is entered at logic block 20 where a command is given to scan the text buffer 2. At logic block 22 a test is initiated to determine if the end of text in the text buffer 2 has been reached. If the end of text has been reached, the routine exists at logic block 25 to return to the calling program or await operator. Assuming that the end of text in the text buffer 2 has not been reached, the word buffer 4 is initialized at logic block 23. Flow continues through node 24 to logic block 26 where the next character in the text buffer 2 is read. The next character is tested at logic block 27 to determine if it is a word delimiter. The list of word delimiters is defined for the program algorithm in Table 1 as space, tab, index, and carrier return.

TABLE 1

DECLARE

DELIMITER ARRAY OF BOOLEAN INDEXED BY CHARACTER
INITIALIZED TRUE FOR (SPACE, TAB, INDEX,
CARRIER RETURN),

IGNORE ARRAY OF BOOLEAN INDEXED BY CHARACTER
INITIALIZED TRUE FOR (CARRIER RETURN,
SYLLABLE HYPHEN, BLANK HYPHEN, WORD
UNDERSCORE),

BEGINNING PUNCTUATION ARRAY OF BOOLEAN INDEXED
BY CHARACTER INITIALIZED TRUE FOR
(BACKSPACE, HALF INDEX UP, HALF INDEX

DOWN, '_', '(', '!', '{', '<', '<<', '"',
'¡', '¿'),

ENDING PUNCTUATION ARRAY OF BOOLEAN INDEXED BY
CHARACTER INITIALIZED TRUE FOR (HALF INDEX
UP, HALF INDEX DOWN, ',', ':', ';' '?',
'½', '1', '}', '"', '>' '>>', '_'),

SPECIAL CASE CHAR ARRAY OR BOOLEAN INDEXED BY
CHARACTER INITIALIZED TRUE FOR (')', '1',
'.'),

ALPHA ARRAY OF BOOLEAN INDEXED BY CHARACTER
INITIALIZED TRUE FOR ('A' thru 'Z', 'a'
thru 'z'),

ANY ALPHA ARRAY OF BOOLEAN INDEXED BY CHARACTER
INITIALIZED TRUE FOR (all accented or
alphabetic characters),

NUMERIC ARRAY OF BOOLEAN INDEXED BY CHARACTER
INITIALIZED TRUE FOR ('0' thru '9');

Assuming that the character just read is not a word delimiter indicating the end of a word, a branch is taken to
logic block 31 where the character is tested to determine
if it is a backspace code. If the character is not a
backspace code then it is copied from the text buffer 2
into the word buffer 4 at logic block 39 and the routine
returns to node 24 for further processing of characters.

If the test for backspace at logic block 31 indicates that
the character is a backspace code, then that backspace and
any other backspaces immediately following are counted at
logic block 32 and not transferred into the word buffer 4.
Flow continues through node 33 to logic block 34 where a
test is executed to determine if an underscore code has
been reached in the text. If an underscore code is found
then the count of backspaces is decremented for each
underscore code at logic block 35 and the underscore codes
are not transferred to the word buffer 4 as well. If no
more underscore codes are found or if the backspace count
goes to zero, flow continues through node 36 to logic

**0054658**

block 37 where a test is conducted to determine if the backspace count exceeds zero. If the backspace count still exceeds zero, the additional backspaces are added to the word buffer 4 and the backspace count is decremented at logic block 38 with flow returning to node 36 until the backspace count equals zero. At this point a branch is taken back to node 24 for reading the next character. This procedure prevents the combination of backspace codes and underscore codes from being transferred into the word buffer 4 since these codes do not affect the spelling of the word.

When a word delimiter is detected at logic block 27 a branch is taken to logic block 28 where the contents of the word buffer 4 are tested to determine if any alphabetic characters are contained in the word buffer 4. The list of alphabetic characters is given in Table 1. If no alphabetic characters are contained in the buffer 4, the word is considered verified and a branch is taken back to node 21 to continue processing the next word in the text buffer 2. A program routine in pseudo code for the scan text routine is shown in Table 2.

TABLE 2

PROCEDURE SCAN TEXT BUFFER
        (TEXT BUFFER, BEGINNING OF TEXT, END OF TEXT);

/*   This procedure is the main entry point for spelling
     verification. It will scan TEXT BUFFER from BEGINNING
     OF TEXT to END OF TEXT, copying each word as it is
     found into WORD BUFFER. When the end of a word is
     found, if the word contained at least one alphabetic
     character, VALID WORD is called to separate out any
     punctuation and verify the remainder against a dictio-
     nary.   */

DECLARE

```
TEXT BUFFER ARRAY (* : *) OF CHARACTER,
/* Pointers into TEXT BUFFER */
(BEGINNING OF TEXT, END OF TEXT,
    P, START OF WORD) INTEGER,
WORD BUFFER ARRAY (1 : *) OF CHARACTER,
/* Pointers into WORD BUFFER */
(L, R) INTEGER,
BKSP CNT INTEGER,
CONTAINS ALPHAS BOOLEAN;
P = BEGINNING OF TEXT;
BKSP CNT = 0;
WHILE P < END OF TEXT DO
    /* Start a new word by setting left and right
       end-of-word pointers to first character of
       WORD BUFFER. */
    L = 1;
    R = 1;
    /* Initially, WORD BUFFER does not contain any
       alphabetic characters. */
    CONTAINS ALPHAS = FALSE;
    /* Skip over any word delimiters preceding the
       next word in TEXT BUFFER. */
    WHILE P < END OF TEXT &
        DELIMITER (TEXT BUFFER !P1) DO
        P = P + 1;
    ENDWHILE;
    /* Note position in TEXT BUFFER of the start of
       the next word in case verification fails. */
    START OF WORD = P;
    /* Word ends at the end of text, the next word
       delimiter, or a carrier return not preceded
       by a syllable or blank hyphen. */
    WHILE P < END OF TEXT &
        (NOT DELIMITER (TEXT BUFFER !P1) OR
        TEXT BUFFER (P) = CARRIER RETURN &
        (TEXT BUFFER !P - 11 = SYLLABLE HYPHEN OR
        TEXT BUFFER !P - 11 = BLANK HYPHEN)) DO
        IF TEXT BUFFER (P) = BACKSPACE THEN
```

```
/* Drop out the backspace-underscore
   sequences. */
WHILE P < END OF TEXT &
    TEXT BUFFER (P) = BACKSPACE DO
    /* Count the number of consecutive
       backspaces. */
    BKSP CNT = BKSP CNT + 1;
    P = P + 1;
ENDWHILE;
WHILE P < END OF TEXT &
    TEXT BUFFER (P) = UNDERSCORE &
    BKSP CNT >0 DO
    /* Discard as many underscores as
       there were backspaces. */
    BKSP CNT = BKSP CNT - 1;
    P = P + 1;
ENDWHILE
WHILE BKSP CNT > 0 DO
    WORD BUFFER (R) = BACKSPACE;
    /* Add any backspaces not cancelled by
       underscores into the word buffer. */
    R = R + 1;
    BKSP CNT = BKSP CNT - 1;
ENDWHILE;
ELSE
    /* If the next character in the text
       buffer is not an ignore character,
       add it to the word buffer. */
    IF NOT IGNORE (TEXT BUFFER [P]) THEN
        WORD BUFFER (R) = TEXT BUFFER (P);
        R = R + 1;
        /* Keep track of whether any
           alphabetic characters, with or
           without accents, have yet been
           added to WORD BUFFER. */
        CONTAINS ALPHAS = CONTAINS ALPHAS OR
            ANY ALPHA (TEXT BUFFER [P]);
    ENDIF;
```

11

0054658

```
        P = P + 1;
    ENDIF;
    ENDWHILE;
    /* If the word contains at least one alphabetic
        character, check it for spelling. */
    IF CONTAINS ALPHAS THEN
            IF NOT VALID WORD (WORD BUFFER, L, R) THEN
                    /* Word cannot be verified; call
                        ERROR ROUTINE to give the
                        appropriate message. */
                    CALL ERROR ROUTINE (TEXT BUFFER,
                            START OF WORD, P);
            ENDIF;
        ENDIF;
    ENDWHILE;
    END SCAN TEXT BUFFER;
```

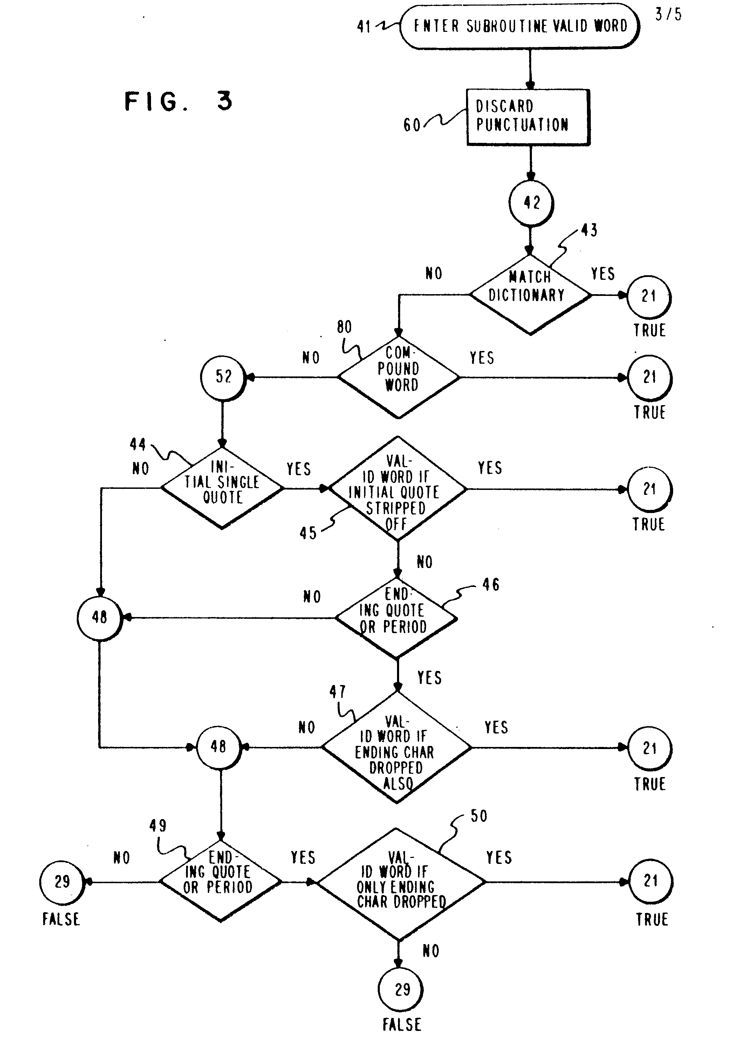

Still referring to FIG. 2, when alphabetic characters are contained in the word buffer 4 a branch is taken to logic block 40 which causes the valid word subroutine shown in FIG. 3 to determine if the characters form a valid word. The valid word subroutine is entered at logic block 41. Table 3 is a program in pseudo code for the valid word subroutine.

TABLE 3

```
    PROCEDURE VALID WORD (WORD BUFFER, L, R) RETURNS
            (BOOLEAN);

    DECLARE
            WORD BUFFER ARRAY (1 : *) OF CHARACTER,
            (L, R, TRIAL R) INTEGER,
            FOUND BOOLEAN;
    FOUND = FALSE;
    CALL DISCARD PUNCTUATION (WORD BUFFER, L, R);
    IF SPECIAL CASE (WORD BUFFER, L, R) OR
            DICTIONARY (WORD BUFFER, L, R) OR
```

```
            COMPOUND WORD (WORD BUFFER, L, R) THEN
          FOUND = TRUE;
      ELSE
        IF WORD BUFFER (L) = '''' THEN
          TRIAL L = L + 1;
          TRIAL R = R;
          /* Try stripping off initial single quote. */
          IF VALID WORD (WORD BUFFER, TRIAL L, TRIAL R)
          THEN
              FOUND = TRUE;
          ELSE
              IF WORD BUFFER (R - 1) = '''' OR
                  WORD BUFFER (R - 1) = '.' THEN
                TRIAL L = L + 1;
                TRIAL R = R - 1;
                /* Try stripping off initial single
                    quote and trailing quote or
                    period. */
                IF VALID WORD (WORD BUFFER, TRIAL L,
                  TRIAL R) THEN
                  FOUND = TRUE;
                ENDIF;
              ENDIF;
          ENDIF;
      ENDIF;
      IF NOT FOUND & (WORD BUFFER [R - 1] = '''' OR
        WORD BUFFER [R - 1] = '.') THEN
          TRIAL L = L;
          TRIAL R = R - 1;
          /* Try stripping off only the trailing quote
              or period. */
          IF VALID WORD (WORD BUFFER, TRIAL L, TRIAL R)
              THEN
              FOUND = TRUE;
          ENDIF;
      ENDIF;
    ENDIF;
    RETURN (FOUND);
```

END VALID WORD;

The valid word subroutine attemps to verify the word as a special case, as a single entry in the dictionary, or as a compound word. Attempts are made to verify the word by stripping off punctuation, including beginning single quotes and ending quotes or periods. Recursion is used to examine all the possible variations of stripping off these characters. Pseudo code for the special case routine is shown in Table 4.

TABLE 4

```
PROCEDURE SPECIAL CASE (WORD BUFFER, L, R) RETURNS
        (BOOLEAN);

/* This procedure will check for the special
   case of a word which consists only of a
   single unaccented alphabetic character
   followed by a period, right parenthesis, or
   right bracket. These consequences commonly
   occur as initials or "numbering" paragraphs. */

    DECLARE
        WORD BUFFER ARRAY (1 : *) OF CHARACTER,
        (L, R) INTEGER;
    RETURN (R - L = 2 & ALPHA (WORD BUFFER !L1) &
            SPECIAL CASE CHAR (WORD BUFFER !L+11));
END SPECIAL CASE;
```

The valid word routine proceeds from logic block 41 to logic block 60 wherein the subroutine for discarding punctuation is called. The pseudo code for the discard punctuation procedure is shown in Table 5. The discard punctuation procedure attempts to recognize and discard punctuation from the beginning or end of the word. The process continues until either no more characters can be stripped off or until a special case is recognized. The beginning and ending punctuation characters are set forth in Table 1 as are the characters for the special case.


TABLE 5


```
PROCEDURE DISCARD PUNCTUATION (WORD BUFFER, L, R);

DECLARE
        WORD BUFFER ARRAY (1 : *) OF CHARACTER,
        (L, R, LASTL, LASTR, I, PAREN CNT) INTEGER;
REPEAT
        /* Save left and right end-of-word pointers to
            allow later comparison to see if discard
            process was able to drop any more characters.*/
        LASTL = L;
        LASTR = R;
        /* Discard any beginning punctuation. */
        WHILE L < R &
                BEGINNING PUNCTUATION (WORD BUFFER !L1) DO
            L = L + 1;
        ENDWHILE;
        /* Count the number of right parentheses not
            matched by left parentheses that may possibly
            be stripped off the right end of the word. */
        I = L;
        PAREN CNT = 0;
        WHILE I < R DO
                IF WORD BUFFER (I) = '(' THEN
    /* A left parenthesis can never be stripped off the
        right end of a word, thus preventing any preceding
        right parentheses from being discarded. */
                        IF PAREN CNT > 0 THEN
                                PAREN CNT = 0;
                        ENDIF;
                        PAREN CNT = PAREN CNT - 1;
                ELSE
                        IF WORD BUFFER (I) = ')' THEN
                                PAREN CNT = PAREN CNT + 1;
```

```
                ENDIF;
             ENDIF;
             I = I + 1;
          ENDWHILE;
          /* Discard any footnote reference from end of
             word. */
          CALL DISCARD FOOTNOTE (WORD BUFFER, L, R);
          /* Discard any other ending punctuation. */
          WHILE R > L &
                   NOT SPECIAL CASE (WORD BUFFER, L, R) &
                   (ENDING PUNCTUATION (WORD BUFFER
                   !R - 11)
                   OR
                   (WORD BUFFER (R - 1) = ')' &
                   PAREN CNT > 0)) DO
                IF WORD BUFFER (R -1) = ')' THEN
                   PAREN CNT = PAREN CNT - 1;
                ENDIF;
                R = R - 1;
                CALL DISCARD FOOTNOTE (WORD BUFFER, L, R);
             ENDWHILE;
          UNTIL SPECIAL CASE (WORD BUFFER, L, R) OR
                (L = LASTL & R = LASTR) ENDREPEAT;
       END DISCARD PUNCTUATION;
```

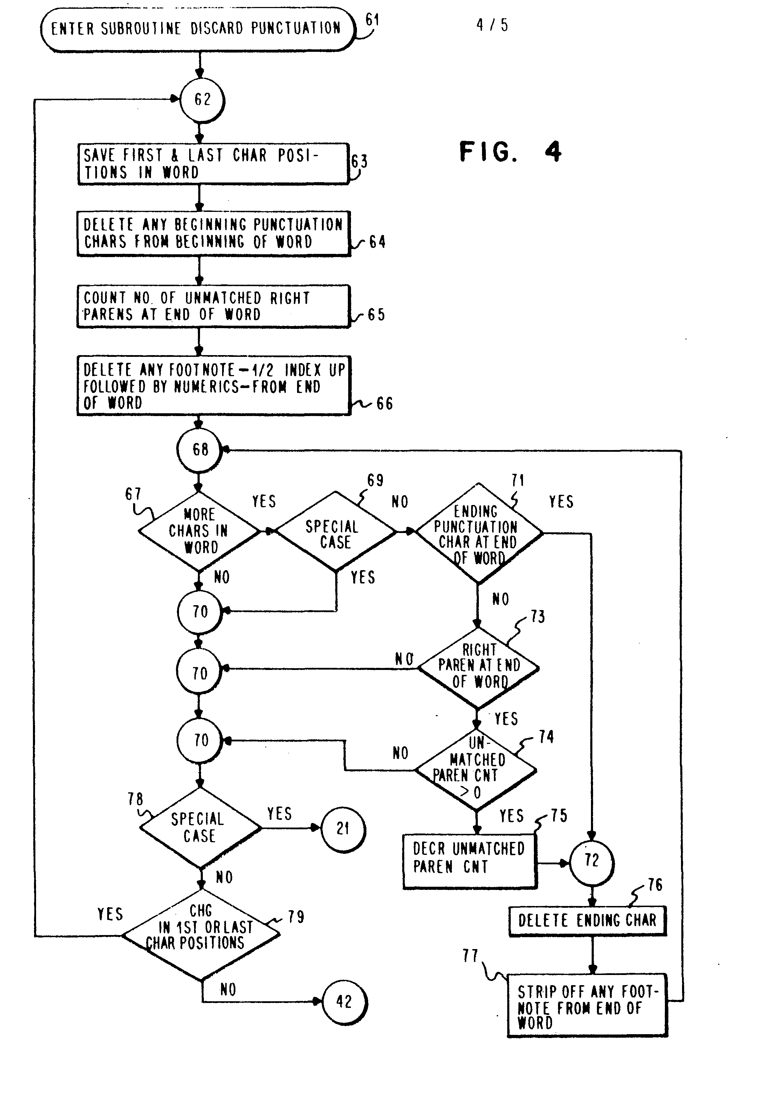

Referring now to FIG. 4 the punctuation discard subroutine is entered at logic block 61 and flow passes through node 62 to logic block 63 where the first and last characters of the word are saved. At logic block 64 any punctuation found is deleted from the beginning of the word and a count of unmatched right parentheses at the end of the word is accumulated at logic block 65. In logic block 66 footnote notation is deleted from the ending of the word and flow continues through node 68 to logic block 67 where the word is tested to determine if it contains more characters. The routine for footnote deletion is shown in pseudo code in Table 6. If the word contains no more characters a branch is taken to node 70. If the word does contain more characters then it is tested at logic block 69 to determine if it is a special case as defined in Table 1. If the special case exists then flow branches to node 70. If the word is not a special case, it is tested for ending punctuation at logic block 71 as defined in Table 4. If the last character in the word equals one of the ending punctuation characters then flow proceeds through node 72 to logic block 76 where the ending character is deleted. At logic block 77 any footnote code in the word is deleted and flow returns to node 68 for futher testing of the word.

## TABLE 6

```
PROCEDURE DISCARD FOOTNOTE (WORD BUFFER, L, R);
        /* This procedure will attempt to recognize and
           discard footnote references typed as a
           sequence of numerics preceded by a half
           index up. */


        DECLARE
                WORD BUFFER ARRAY (1 : *) OF CHARACTER,
                (L, R, I) INTEGER;
        I = R - 1;
        WHILE I > L & NUMERIC (WORD BUFFER [I]) DO
                I = I - 1;
        ENDWHILE;
        IF WORD BUFFER (I) = HALF INDEX UP THEN
                R = I;
        ENDIF;
     END DISCARD FOOTNOTE;
```

If the last character in the word at logic block 71 does not match one of the ending punctuation characters in Table 1, then the word is tested at logic block 73 to determine if the last character is a right parenthesis. When the last character is not a right parenthesis branch is taken to node 70. When the last character is a right parenthesis a branch is taken to logic block 74 wherein the unmatched parenthesis count is checked to determine if it is greater than zero.

If the unmatched parenthesis count is greater than zero, a branch is taken to logic block 75 wherein the unmatched parenthesis count is decremented by one. Flow then continues through node 72 as previously described. If the unmatched parenthesis count is not greater than zero then a branch is taken through node 70 to logic block 78 and the special case test is made. If the special case test is met then the routine returns to node 21 in FIG. 2. If the special case test is not met then processing continues to logic block 79 wherein a test is conducted to determine if the first or last character positions in the word have changed. If the first or last character position in the word has changed then a branch is taken back through node 62 for more punctuation discard processing. However, if the first and last character positions have not changed then a branch is taken back to node 42 in FIG. 3.

When the discard punctuation subroutine returns to node 42 in FIG. 3 processing continues to logic block 43 wherein the word is tested to determine if it matches a word in the dictionary memory 6. Means for constructing and accessing the dictionary are not a part of this invention but pseudo code describing the interface to the dictionary compare algorithm is shown in Table 7. If the word matches a word stored in the dictionary memory 6 then a branch is taken to node 21 in FIG. 2 and processing continues.

TABLE 7

```
/* External procedure assumed by this algorithm. */
PROCEDURE DICTIONARY (WORD BUFFER, L, R) EXTERNAL
    RETURNS (BOOLEAN);

        /* This procedure will search a dictionary of
            words and return true if the argument word
            is found in that dictionary. */
```

0054658

DECLARE

WORD BUFFER ARRAY (1 : *) OF CHARACTER,

(L, R) INTEGER;

END DICTIONARY;


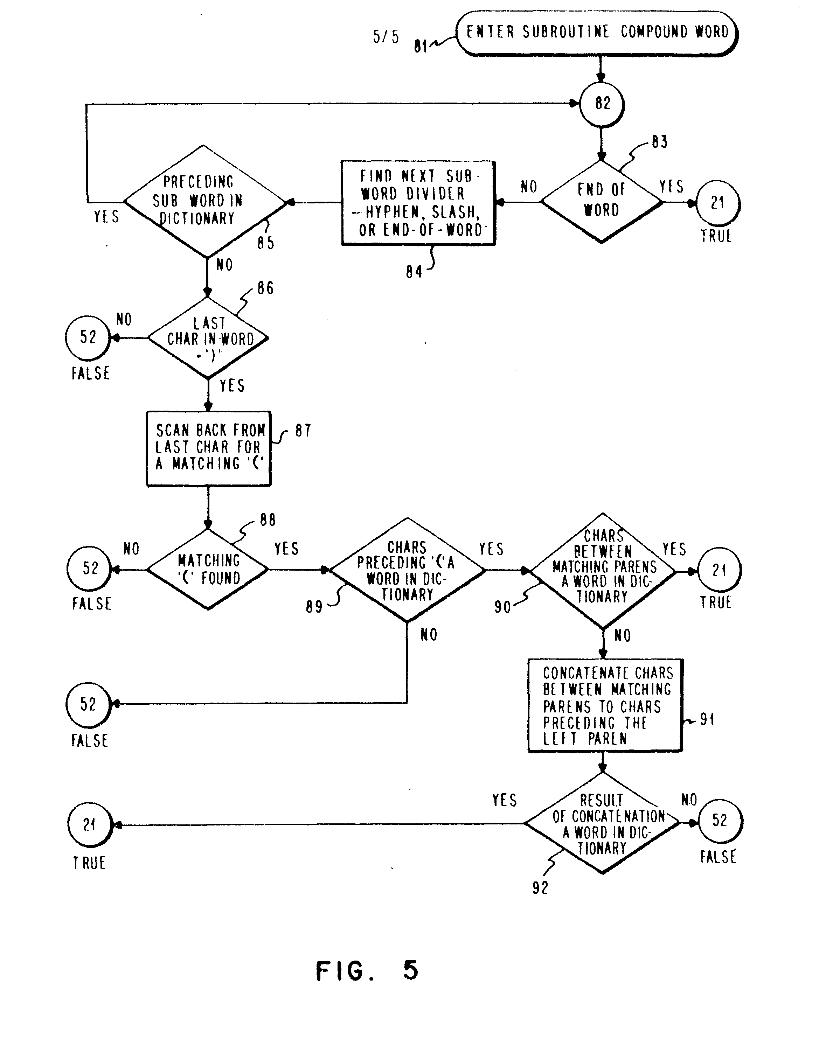

When the word in buffer memory 4 is not found in the dictionary memory 6 after the test at logic block 43 (fig. 3), processing continues to logic block 80 wherein the word is tested to determine if it is a compound word. A flow diagram for the compound word subroutine is shown in FIG. 5 and pseudo code for the compound word subroutine is given in Table 8. The compound word subroutine is entered at logic block 81 and processing proceeds through node 82 to logic block 83 wherein a test is conducted to determine if the end of the word has been reached. Assuming that the end of the word has not been reached, processing continues to logic block 84 wherein the word is reached for a subword divider such as a hyphen or slash. The last character in the buffer is considered to be followed by an implicit subword divider. When the subword divider is found, processing proceeds to logic block 85 wherein the preceding subword is compared to the contents of the dictionary memory 6. If the subword is found in the dictionary memory 6 a branch is taken back to node 82 and logic blocks 83, 84, and 85 are looped through again.


TABLE 8


PROCEDURE COMPOUND WORD (WORD BUFFER, L, R) RETURNS (BOOLEAN);

/* This procedure attempts to recognize compound words formed either by

a) joining simple words with slashes or hyphens (e.g., input/output or mother-in-law),

b) using parentheses to indicate alternate word choices (e.g;, his (her)), or

c) adding parenthetically optional characters to the end of a word (e.g., case(s)). */

```
DECLARE
        WORD BUFFER ARRAY (1 : *) OF CHARACTER,
        (L, R, I, J, PAREN CNT) INTEGER,
        VERIFY BOOLEAN;
/* Consider alternative (a). */
VERIFY = TRUE;
/* I is anchored to left end of the first subword. */
I = L;
WHILE I < R & VERIFY DO
        J = I;
        /* J is moved to the right until the end of the
            current subword is reached. */
        WHILE J < R &
            WORD BUFFER (J) ≠ HYPHEN &
                WORD BUFFER (J) ≠ '/' DO
        J = J + 1;
        ENDWHILE;
        /* If any subword fails to verify, then
            verification by alternative (a) fails. */
        IF NOT DICTIONARY (WORD BUFFER, I, J) THEN
                VERIFY = FALSE;
        ENDIF;
        /* Set I to the beginning of the next subword. */
        I = J + 1;
ENDWHILE;
IF NOT VERIFY THEN
        /* Consider alternatives (b) and (c). */
        IF WORD BUFFER (R - 1) = ')' THEN
                /* If the word ends with a right
                    parenthesis, scan back through the
```

```
word looking for a matching left
parenthesis. */
I = R - 1;
PAREN CNT = 1;
WHILE I > L & PAREN CNT ≠ 0 DO
     I = I - 1;
     IF WORD BUFFER (I) = '(' THEN
          PAREN CNT = PAREN CNT - 1;
     ELSE
          IF WORD BUFFER (I) = ')' THEN
               PAREN CNT = PAREN CNT + 1;
          ENDIF;
     ENDIF;
ENDWHILE;
IF PAREN CNT = 0 THEN
     /* Having found a matching left
        parenthesis, chek to see if the
        characters preceding it form a
        word. */
     IF DICTIONARY (WORD BUFFER, L, I)
          THEN
          /* If the characters within the
             parenthesis form a word, then
             verification is achieved by
             alternative (b). */
          IF DICTIONARY (WORD BUFFER,
             I + 1, R) THEN
               VERIFY = TRUE;
          ELSE
               /* If the parenthesized
                  characters fail to
                  verify as a word,
                  attempt to verify by
                  alternative (c). */
               J = I;
               /* Delete the left
                  parenthesis by shifting
                  the parenthesized
```

```
                              characters one position
                              to the left. */
                         WHILE J < R - 1 DO
                              WORD BUFFER (J) =
                                   WORD BUFFER (J +
                                   1);
                              J = J + 1;
                         ENDWHILE;
                         /* Check to see if the
                            result of interpreting
                            the parenthesized string
                            as optional characters
                            to be appended to the
                            basic word results in a
                            valid word. */
                         IF DICTIONARY (WORD BUFFER,
                           L, R - 2) THEN
                              VERIFY = TRUE;
                         ENDIF;
                         /* Restore the deleted left
                            parenthesis. */
                         J = R - 1;
                         WHILE J > I DO
                              WORD BUFFER (J) =
                                   WORD BUFFER
                                   (J - 1);
                              J = J - 1;
                         ENDWHILE;
                         WORD BUFFER (I) = '(';
                    ENDIF;
               ENDIF;
             ENDIF;
          ENDIF;
     ENDIF;
     RETURN (VERIFY);
END COMPOUND WORD;
```

0054658

If a subword is found which is not in the dictionary, the last character of the word is checked to determine if it is a right parenthesis at logic block 86 (fig. 5). If the last character is not a right parenthesis, a branch is taken to node 52 in FIG. 3 indicating that the word is not a compound word. If the last character in the word is a right parenthesis, then processing proceeds to logic block 87 (fig. 5) wherein the word is scanned backward from the last character to search for a matching left parenthesis. If no matching left parenthesis is found at logic block 88, then a branch is taken back to node 52 indicating that the word is not a compound word.

When the word contains a matching left parenthesis, the portion of the word preceding the left parenthesis is compared to the contents of the dictionary memory 6 at logic block 89. If no match is found, a branch is taken back to logic block 52 (fig. 3) as previously stated. If the characters preceding the left parenthesis match a word in a dictionary, processing continues to logic block 90 wherein the characters between the left and right parentheses are compared to the contents of dictionary memory 6. If the characters between the parentheses match a word in the dictionary memory 6, then processing returns to node 21 in FIG. 2 indicating that the word is a valid word followed by a parenthesized expression such as "his(hers)".

If the characters between the parentheses do not match a word in the dictionary, then the parentheses are removed at logic block 91 (fig. 5) and the two groups of characters are concatenated. The concatenated word is then compared to the contents of the dictionary memory 6 at logic block 92. If no match is found a branch is taken to node 52 indicating that the word is invalid. If the concatenated word matches a word in the dictionary memory 6 then a branch is taken to node 21 indicating that the expression is correct. This procedure processes a word such as match(es).

**0054658**

Referring back to FIG. 3, when the return from the compound word subroutine indicates a branch to node 52 the processing continues to logic block 44 wherein the word is tested to determine if it begins with an initial single quote. If the first character of the word is a single quote, the word is tested at logic block 45 with the quote removed to determine if it will match a word in the dictionary memory 6. When removal of the initial single quote provides a match with a word in the dictionary memory 6 processing returns to node 21 of FIG. 2 indicating that the word is valid. If no match occurs at logic block 45, then processing continues to logic block 46 wherein the word is tested to determine if it contains an ending quote or period. If an ending quote or period is found at logic block 46, then processing continues to logic block 47 wherein the word is compared to the dictionary memory 6 with the ending quote or period removed. A match from the comparison indicates that the word is valid and processing returns to node 21 in FIG. 2. When the word does not match a word in the dictionary memory 6 after the initial quote and ending quote or period have been removed or if the word contained no initial single quote, processing continues through node 48 to logic block 49 wherein the word is again tested for an ending quote or period. If no ending quote or period is found, a branch is taken to node 29 in FIG. 2 wherein processing continues through logic block 30 to the error routine. The error routine is a procedure to perform whatever error handling is required when a non-verified word is found, for example processing may be halted or a message may be presented to the operator. While the means for implementing an error routine is not part of this invention, Table 9 shows the pseudo code for a sample interface to such a routine.

TABLE 9

/* External procedure assumed by this algorithm. */

```
PROCEDURE ERROR ROUTINE (TEXT BUFFER, START OF WORD,
        END OF WORD) EXTERNAL;
        /* This procedure will perform whatever error
           handling is required when a non-verified
           word is found. This might, for example, be
           a message to the operator. */

   DECLARE
        TEXT BUFFER ARRAY (* : *) OF CHARACTER,
        (START OF WORD, END OF WORD) INTEGER;
        END ERROR ROUTINE;
```

If the word is found to have an ending quote or period then processing continues to logic block 50 wherein the word is tested against the dictionary memory 6 to determine if it is valid after only the ending character is dropped. When the word is not found upon dropping only the ending character the process returns to node 29 in FIG. 2 to summon the error routine at logic block 30. However, if the word is found to be valid upon dropping the ending character, then a branch is taken to node 21 in FIG. 2 indicating that the word is properly spelled. This procedure is executed iteratively for each word stored in the text buffer 2.

While this invention has been described with reference to a specific set of computer instructions and with respect to a specified list of punctuation characters, it will be understood by those skilled in the art that the spirit of this invention can be implemented in various other computer languages and that the list of punctuation characters may be modified without avoiding the scope of the invention claimed herein. Furthermore, while the preferred embodiment of this invention has been shown and described as a number of program routines for controlling a general purpose processor, it is well recognized that the invention could be implemented as a special purpose processor utilizing microcode to perform the same functions.

CLAIMS

1. Automatic spelling checking and correction process for parsing a continuous string of character codes stored in a memory of a text processing system, including intermixed control codes, punctuation codes and text codes, characterized by the steps of :

    a) defining and storing a set of word delimiter codes,

    b) scanning and comparing said string of character codes for one word delimiter code,

    c) scanning and comparing said string of character codes for the next succeeding word delimiter codes,

    d) transferring the character code segment between said word delimiter codes into a word buffer,

    e) removing control codes from said character code segment,

    f) removing the punctuation codes from said character code segment, and

    g) comparing the character code segment to a dictionary of text words.

2. Process according to Claim 1 wherein step f further includes the steps of :

    i) removing punctuation codes from the beginning of the character code segment, and

    ii) removing punctuation codes from the end of the character code segment.

3. Process according to Claim 1 or Claim 2 wherein step f further includes the steps of :

1) defining and storing a set of subword divider codes,

2) scanning and comparing the character code segment for subword divider codes, and

3) parsing the character codes preceding each subword divider code into a separate character code segment.

4. Process according to Claim 1 or Claim 2 wherein step f further includes the steps of :

1) defining and storing a set of subword divider codes,

2) scanning and comparing the character code segment for subword divider codes,

3) removing the subword divider codes, and

4) concatenating the remaining character codes into a continuous character code segment.

5. Process according to Claim 3 or Claim 4 wherein said subword divider codes are defined as slash, hyphen, parenthesis, and brackets.

6. Process according to any one of the preceding Claims wherein said word delimiter codes are defined as space, tab, carrier return, index, format change, beginning of text and end of text.

FIG. 1

FIG. 2

FIG. 3

0054658

3/5

**FIG. 4**

ENTER SUBROUTINE DISCARD PUNCTUATION — 61

62

SAVE FIRST & LAST CHAR POSI-TIONS IN WORD — 63

DELETE ANY BEGINNING PUNCTUATION CHARS FROM BEGINNING OF WORD — 64

COUNT NO. OF UNMATCHED RIGHT PARENS AT END OF WORD — 65

DELETE ANY FOOTNOTE—1/2 INDEX UP FOLLOWED BY NUMERICS—FROM END OF WORD — 66

68

67 — MORE CHARS IN WORD

YES

69 — SPECIAL CASE

NO

71 — ENDING PUNCTUATION CHAR AT END OF WORD

YES

NO — 70

YES

70

NO

73 — RIGHT PAREN AT END OF WORD

NO — 70

YES

70

NO

74 — UN-MATCHED PAREN CNT > 0

YES

78 — SPECIAL CASE

YES — 21

NO

79 — CHG IN 1ST OR LAST CHAR POSITIONS

YES

NO — 42

DECR UNMATCHED PAREN CNT — 75

72

DELETE ENDING CHAR — 76

77 — STRIP OFF ANY FOOT-NOTE FROM END OF WORD

5/5

FIG. 5

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | G 06 F 15/20 |
| A | COMMUNICATION OF THE ACM, Vol.23, No.12, December 1980, pages 676-687 NEW YORK (US) J. PETERSON: "Computer Programs for Detecting en Correcting Spelling Errors" <br><br> * Page 677, column 3, line 10 - page 678, column 1, line 27; page 679, column 1, lines 26-44 * | 1 | |
| | -- | | **TECHNICAL FIELDS SEARCHED (Int.Cl. 3)** <br><br> G 06 K <br> G 06 F |
| A | GB - A - 1 572 709 (XEROX) <br><br> * Page 1, line 34 - page 2, line 17 * | 1 | |
| | -- | | |
| A | GB - A - 1 533 499 (IBM) <br><br> * Page 1, line 85 - page 2, line 12; page 3, lines 17-48; claim 1 * | 1,6 | |
| | ---- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 25-03-1982 | BARRACO |

EPO Form 1503.1 06.78